# FASCICULE DE BREVET EUROPEEN

(11) **EP 1 446 548 B1**
(45) Date de publication et mention de la délivrance du brevet: **13.01.2010**
(21) Numéro de dépôt: 02803486.6
(22) Date de dépôt: 13.11.2002
(51) Int. Cl.: E06B 9/88, E06B 9/68, H02P 7/00

(54) **PROCEDE DE MISE EN CONFORMITE AVEC L'ORDRE DONNE DU SENS D'UN MOTEUR ELECTRIQUE DANS UNE INSTALLATION D'OCCULTATION OU SIMILAIRE TEL QUE FERMETURE**
VERFAHREN ZUM ABSTIMMEN AUF DEN GEGEBENEN RICHTUNGSBEFEHL EINES ELEKTROMOTORS IN EINER VERSCHLUSSANLAGE ODER DERGLEICHEN WIE ZUM BEISPIEL EINEM ROLLLADEN
METHOD FOR MATCHING THE COMMAND ISSUED OF THE DIRECTION OF AN ELECTRIC MOTOR IN A CLOSURE INSTALLATION OR THE LIKE SUCH AS A ROLLER SHUTTER

(30) Priorité: 22.11.2001 FR 0115134
(43) Date de publication de la demande: 18.08.2004
(73) Titulaire: Somfy SAS, 74300 Cluses (FR)
(72) Inventeur: AUTRET, Capucine, F-74460 Marnaz (FR)
(74) Mandataire: Bugnion Genève
(86) Numéro de dépôt international: PCT/IB2002/004755
(87) Numéro de publication internationale: WO 2003/044312

(56) Documents cités:
- EP-A- 0 833 435

## Description

L'invention se rapporte au domaine de la commande de moteurs électriques destinés à la manoeuvre de dispositifs de protection solaire, d'occultation ou de fermeture, dont l'élément d'occultation est mobile entre au moins deux positions extrêmes.

L'invention se rapporte plus particulièrement aux dispositifs motorisés pour lesquels il est difficile de prévoir à l'avance le sens de rotation à donner au moteur en réponse à une consigne de mouvement donnée, du fait de deux possibilités de pose du moteur en relation avec le produit à entraîner.

Les installations du type comprenant des stores et des volets roulants enroulables constituent un exemple de dispositifs concernés par l'invention, selon que le moteur est monté à gauche ou à droite du tube d'enroulement, un ordre de montée sera satisfait par une rotation du moteur soit dans un sens, soit dans l'autre. D'autres exemples d'installations concernées sont, par exemple, les fermetures du type dont la porte mobile se déplace en coulissement horizontal, ainsi que les fermetures du type dit volets battants ou les portails pivotants ou coulissants.

Dans le cas de moteurs traditionnels à courant continu ou alternatif, il suffit d'inverser les deux fils, ou deux des fils d'alimentation, pour obtenir la bonne relation entre les ordres donnés sur le point de commande et le mouvement du produit, s'il s'avère que ce mouvement est inversé. L'inversion se fait souvent au niveau du point de commande.

Dans le cas d'un moteur à commande électronique intégrée, une inversion de fils d'alimentation du moteur est généralement sans effet. L'inversion de mouvement doit être logique.

La demande de brevet EP 0 493 322 déposée par la demanderesse propose notamment un dispositif selon lequel cette inversion est réalisée dans l'unité logique de traitement permettant l'alimentation du moteur, plutôt qu'en sortie du point de commande, l'inversion se faisant grâce à un contact supplémentaire, dont la commande signifie à l'unité logique qu'elle doit appliquer une inversion des rôles des relais de commande. Il y a donc nécessité d'une procédure particulière de changement de sens qui prendra d'autant plus de temps lors de l'installation qu'il est indispensable que l'entrée dans cette procédure ne puisse résulter d'une fausse manoeuvre de la part de l'utilisateur. On utilise en général un appui très long sur une combinaison de touches, ou encore une ou plusieurs touches non directement accessibles sur le point de commande, par exemple, protégées par un capot.

La demande de brevet EP 0 833 435, elle aussi déposée par la demanderesse, propose un dispositif simplifié permettant un mode de mise en concordance automatique du sens de rotation moteur à la commande émise, soit par la mesure et comparaison des temps de parcours entre deux butées, soit par la mesure et comparaison des distances parcourues pendant une même durée dans l'un et l'autre sens. Ce dispositif est donc limité à des produits à mouvement essentiellement vertical, et/ou pour lesquels la pesanteur ou un autre effet introduit une différenciation selon le sens.

La demande de brevet EP 0 997 605 décrit, sans référence à l'art antérieur, l'association de moyens d'appariement et/ou de paramétrage de moteurs télécommandés. Ce paramétrage permet notamment le réglage des positions de fin de course, ou encore l'émission d'un ordre d'inversion du sens de fonctionnement à partir du point de commande. Cette demande de brevet ne fait pas référence à un mode de mise en concordance automatique du sens de rotation moteur à la commande émise.

D'un autre côté, il est prévu, dans le cas de moteurs disposants d'un capteur de position, qu'il soit incrémental ou absolu, de mémoriser la position des fins de course. La demande de brevet EP 0 940 736 divulgue un procédé d'enregistrement des fins de course.

Plus ancien, le brevet FR 2 654 229 décrit également, dans le cas d'un moteur avec capteur incrémental de rotation, un procédé d'enregistrement des fins de course (et des positions intermédiaires), à partir du point de commande, ainsi qu'un mode de reconnaissance logique de la direction à prendre pour rejoindre une telle position, par comparaison du contenu de la mémoire de position courante à celui de la mémoire de position visée.

. Cependant ces deux brevets ne prévoient pas un mode de mise en concordance du sens de rotation moteur à la commande émise, qu'il soit automatique ou non.

Pour de tels moteurs, notamment disposant de capteur(s) de position, l'invention propose de réaliser automatiquement la concordance du sens de rotation moteur à la commande émise, cette mise en concordance- étant effectuée lors de l'enregistrement d'une position fin de course.

Ainsi, selon l'invention, le procédé de mise en concordance du sens de rotation d'un moteur à la commande émise par un boîtier de commande et reçue par un récepteur dans une installation d'occultation ou de fermeture du type comprenant un élément d'occultation ou de fermeture mobile entre deux positions extrêmes, une première position dite de fin de course d'ouverture, et une deuxième position dite position de fin de course de fermeture, est caractérisé en ce que la mise en concordance est effectuée automatiquement lors de l'enregistrement d'au moins une position de fin de course.

Selon un mode d'exécution, la mise en concordance est effectuée lors d'un premier enregistrement d'une position de fin de course.

Selon un autre mode d'exécution, la mise en concordance est effectuée lors du deuxième enregistrement d'une position de fin de course.

L'invention concerne aussi l'installation d'occultation ou de fermeture destinée à être mise en oeuvre par le procédé de mise en concordance automatique du sens du moteur à la commande émise, tandis qu'elle comprend des moyens d'enregistrement d'au moins une position de fin de course.

On a compris que le procédé de l'invention facilite la mise en oeuvre des installations d'occultation, en proposant un mode de mise en concordance automatique du sens de rotation moteur à la commande émise par le point de commande.

D'autres caractéristiques et avantages de l'invention se dégageront de la description qui va suivre, en regard des dessins annexés, qui ne sont donnés qu'à titre d'exemples non limitatifs.
La figure 1, illustre une installation équipée des moyens de mise en concordance.
La figure 2 représente sous forme d'ordinogramme le procédé de l'invention selon un premier mode d'exécution.
La figure 3 représente sous forme d'ordinogramme le procédé de l'invention selon un deuxième mode d'exécution. -
La figure 4 est une vue similaire à la figure 1, illustrant une installation d'occultation ou de fermeture selon laquelle l'élément d'occultation ou de fermeture est mobile horizontalement et non verticalement comme dans l'installation représentée à la figure 1.

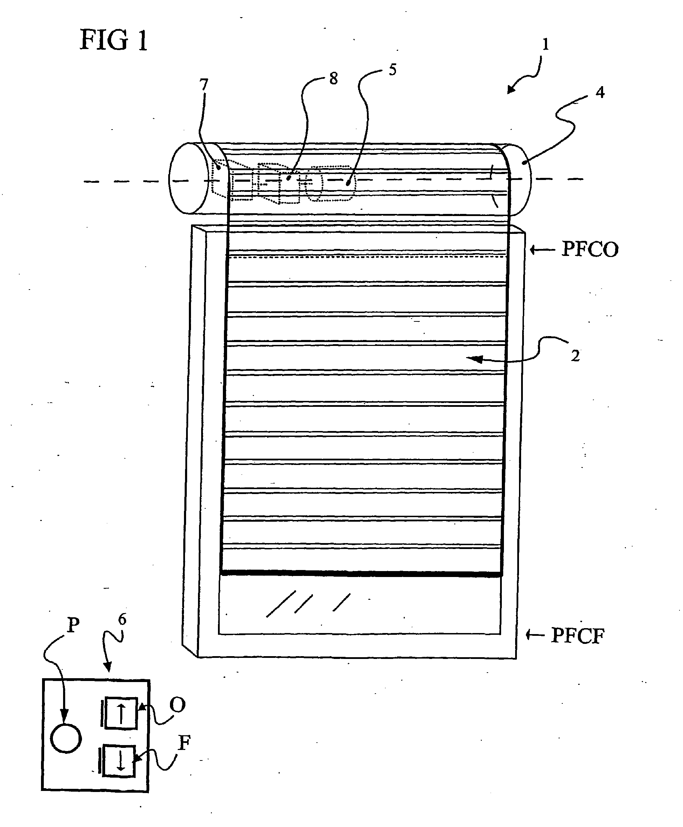

La figure 1 illustre une installation équipée des moyens de mise en concordance du sens de rotation du moteur à la commande émise. Cette installation portant la référence générale (1) qui est, par exemple, une occultation d'une fenêtre (3) comprend un élément d'occultation (2) se déplaçant verticalement, tel qu'un store ou un volet roulant, destiné à être déplacé au moins entre deux positions, à savoir, une position de fin de course d'ouverture (PFCO), et une position de fin de course de fermeture (PFCF). L'installation est donc constituée principalement par un tube d'enroulement et de déroulement (4) actionné par un moteur électrique (5) qui entraîne en rotation ledit tube. Par ailleurs, l'installation comprend un boîtier de commande (6) et un récepteur (7) auquel est associée une unité logique de traitement.

Dans un premier mode de réalisation, la mise en concordance est réalisée dès le premier enregistrement d'une position de fin de course

Dans un second mode de réalisation, la mise en concordance est réalisée dès l'enregistrement de la deuxième position.

Le boîtier de commande ou émetteur (6) comporte au moins deux touches (O, F) dont la fonction principale est de faire connaître au dispositif le sens de déplacement souhaité, dont une fonction secondaire facultative peut être d'indiquer au dispositif de se rendre jusqu'à la fin de course correspondant audit sens souhaité, et dont une fonction en mode de programmation est de désigner la position courante comme position fin de course dans le sens souhaité. Par ailleurs, l'émetteur comprend une touche de programmation (P) permettant à l'utilisateur de passer du mode de fonctionnement dit normal au mode dit de programmation appelé aussi mode de mise en concordance. Bien entendu, la touche de programmation pourrait être remplacée par une combinaison de touches ou une manipulation particulière et spéciale sur les touches existantes.

On fera en sorte que, par construction, par repères écrits ou par pictogrammes, les touches du boîtier de commande désignent sans ambiguïté les deux sens de déplacement physique du produit, une fois celui-ci normalement configuré.

Si on se réfère par la suite à un interrupteur mural de télécommande avec deux touches fléchées, on le supposera, par exemple, disposé dans un support en forme de U. Une des touches correspond alors sans ambiguïté à l'ouverture (désignée, par exemple, par O), et servira, en mode de programmation, à l'enregistrement de la position courante comme position fin de course d'ouverture (PFCO). Inversement, la deuxième touche correspond sans ambiguïté à la fermeture (désignée, par exemple, par F), et servira, en mode de programmation, à l'enregistrement de la position courante comme position de fin de course de fermeture (PFCF).

L'émetteur (6) envoie une trame d'ouverture (TO) quand on appuie sur la touche d'ouverture (O) en mode normal, et respectivement une trame de fermeture (TF) quand on appuie sur la touche de fermeture (F), il envoie une trame de fin de course d'ouverture (TFCO) quand on appuie sur la touche d'ouverture (O) en mode de programmation, et respectivement une trame de fin de course de fermeture (TFCF) quand on appuie sur la touche de fermeture (F).

Dans une autre forme générale d'exécution, le passage en mode de programmation provoque l'émission d'une trame spécifique vers le récepteur. A réception de cette trame, le récepteur (7) passe en mode de programmation et il interprète comme apprentissage de fin de course de fermeture, à la réception d'une trame de fermeture (TF) suivant immédiatement ce passage en apprentissage, et comme apprentissage d'une fin de course d'ouverture, à la réception d'une trame d'ouverture (TO) suivant immédiatement ce passage en apprentissage. Ces façons de faire sont connues de l'art antérieur. L'invention utilise le fait que l'installateur a la possibilité de régler puis de faire mémoriser spécifiquement la position fin de course d'ouverture (PFCO) ou la position fin de course de fermeture (PFCF), sans se préoccuper du détail de cet enregistrement connu, par ailleurs.

Dans la procédure de réglage utilisant un moteur selon l'invention, l'installateur admettra qu'un moteur nouvellement installé ne déplace pas nécessairement le produit dans le sens voulu : par exemple, le produit descend quand il appuie sur la touche de montée (M) et monte quand il appuie sur la touche de descente (D). Malgré tout, le produit reste donc manoeuvrable électriquement.

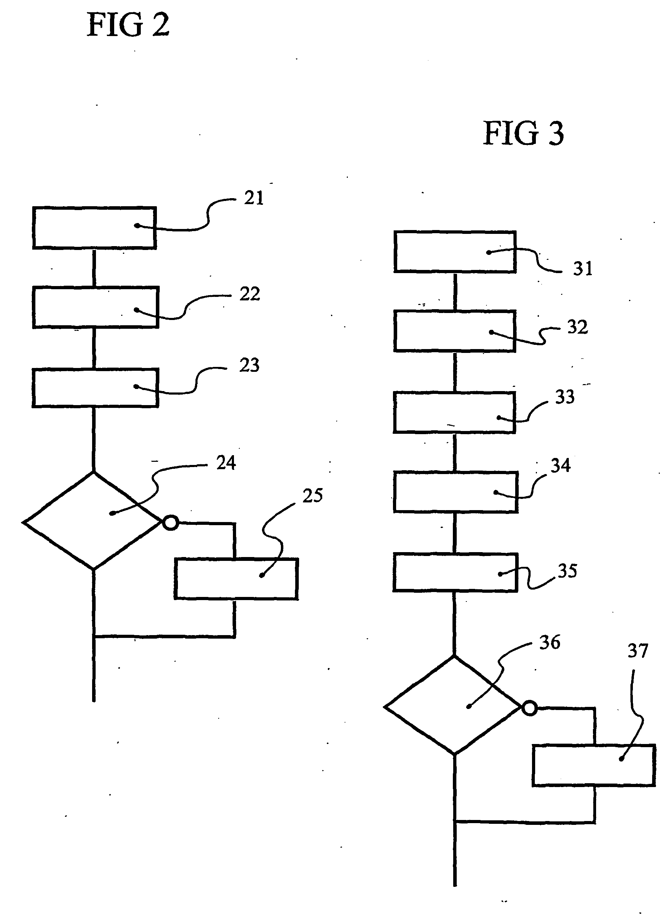

La figure 2 représente sous forme d'ordinogramme le procédé d'ajustement automatique du sens de rotation moteur. Dans ce premier mode, l'ajustement a lieu automatiquement à l'issue de la détermination d'une première position de fin de course.

Dans une première étape (21), l'unité logique du récepteur est configurée de sorte que le moteur soit alimenté selon le premier sens (S1) à réception d'une trame d'ouverture (TO) et selon le deuxième sens (S2) à réception d'une trame de fermeture (TF).

Dans une deuxième étape (22), l'installateur manoeuvre le produit à l'aide de touches appropriées de l'émetteur jusqu'à atteindre la position fin de course de son choix, vraisemblablement la plus proche de l'état initial du produit lors de l'installation.

Dans une troisième étape (23), l'installateur agit sur l'émetteur (6) de manière à émettre la trame de fin de course d'ouverture (TFCO) s'il est en position fin de course d'ouverture (PFCO) ou à émettre la trame de fin de course de fermeture (TFCF) s'il est en position fin de course de fermeture (PFCF). De manière équivalente, l'installateur agit sur l'émetteur (6) de manière à émettre un ordre de passage du récepteur en mode de programmation, et l'envoi qui suit ce passage dù récepteur en mode de programmation d'une trame d'ouverture (TO) ou d'une trame de fermeture (TF) est interprété par ce dernier comme équivalent à la réception d'une trame spécifique de fin de course d'ouverture (TFCO). La position fin de course est enregistrée par l'unité logique de traitement.

Dans une quatrième étape (24), l'unité logique de traitement associée au récepteur compare l'ordre d'enregistrement de fin de course (TFCO, TFCF) au dernier ordre de mouvement reçu (TO, TF).

S'il y a cohérence avec l'attribution de sens de la première étape (c'est-à-dire, TO précédant TFCO ou TF précédant TFCF), alors, la procédure d'installation peut suivre sans qu'il y ait modification du sens de rotation du moteur, sinon,
dans une cinquième étape (25), l'unité logique de traitement procède à une inversion permanente du sens de mouvement, c'est-à-dire que la réception d'une trame d'ouverture (TO) provoque dorénavant l'alimentation du moteur selon le deuxième sens (S2), et la réception d'une trame de fermeture (TF) provoque dorénavant l'alimentation du moteur selon le premier sens (S1).

Sans qu'il soit nécessaire de la détailler, car à la portée de l'homme de métier, une variante de ce mode de réalisation consiste à précéder le test 24 d'un test sur la durée de la dernière manoeuvre (ou de manière équivalente sur la distance parcourue lors de la dernière manoeuvre) pour que celle-ci soit suffisamment élevée. En effet, il est tout à fait possible, par exemple, qu'un volet roulant soit installé dans la baie avec une disposition initiale du tablier totalement enroulée. Il faudra éventuellement faire descendre un peu le tablier avant d'atteindre ce qui est souhaité. Un tel cas de figure empêche manifestement d'appliquer le procédé qui vient d'être décrit, sauf à imposer à l'installateur de n'arriver en position haute qu'avec un dernier mouvement vers le haut, et en position basse qu'avec un dernier mouvement vers le bas.

En pratique, il ne se rencontre pas de situations où le dépassement d'une position fin de course haute vers le haut ou d'une position fin de course vers le bas puisse excéder 50 cm, sans qu'on rencontre, par exemple, une butée physique. L'insertion d'un test garantissant que la dernière manoeuvre de réglage a provoqué un déplacement supérieur à cette valeur de distance ou du temps correspondant garantit la validité du procédé.

La figure 3 représente sous forme d'ordinogramme le procédé de mise en concordance automatique du sens de rotation du moteur d'entraînement, selon un deuxième mode.

Dans ce deuxième mode, la mise en concordance a lieu automatiquement à l'issue de la détermination d'une deuxième position de fin de course. Ce deuxième mode présente l'avantage d'être indépendant d'éventuelles manoeuvres inverses lors du positionnement du produit en fin de course, comme décrites plus haut.

Dans ce mode de réalisation, l'unité logique de traitement associée au récepteur comprend nécessairement un dispositif de comptage de distance ou de temps de manoeuvre du moteur dans l'un ou l'autre sens. Le comptage de distance est effectué selon des moyens connus, par exemple, en comptant les tours moteurs ou les impulsions d'un codeur incrémental lié cinématiquement au tube d'enroulement.

Dans une première étape (31), l'unité logique du récepteur est configurée de sorte que le moteur soit alimenté selon le premier sens-(S1) à réception d'une trame d'ouverture (TO), et selon le deuxième sens (S2) à réception d'une trame de fermeture (TF).

Dans une deuxième étape (32), l'installateur manoeuvre le produit à l'aide des touches appropriées de l'émetteur (6) jusqu'à atteindre la position fin de course de son choix, vraisemblablement la plus proche de l'état initial du produit lors de l'installation.

Dans une troisième étape (33), l'installateur agit sur l'émetteur (6), de manière à émettre la trame de fin de course d'ouverture (TFCO) s'il est en position fin de course d'ouverture (PFCO) ou à émettre la trame de fin de course de fermeture (TFCF) s'il est en position fin de course de fermeture (PFCF). De manière équivalente, l'installateur agit sur l'émetteur de manière à émettre un ordre de passage du récepteur en mode de programmation, et l'envoi qui suit ce passage du récepteur en mode de programmation d'une trame d'ouverture (TO) ou d'une trame de fermeture (TF) est interprété par ce dernier comme équivalent à la réception d'une trame spécifique de fin de course d'ouverture ou de fin de course de fermeture (TFCO ou TFCF). La position fin de course est enregistrée.

A partir de cet instant, l'unité logique de traitement compte, d'une part, l'étendue de mouvement (CPT1) dans le premier sens (S1) et, d'autre part, l'étendue de mouvement (CPT2) dans le deuxième sens (S2).

Dans une quatrième étape (34), l'installateur manoeuvre le produit à l'aide des touches appropriées de l'émetteur, de manière à atteindre la deuxième position de fin de course.

Dans une cinquième étape (35), l'installateur agit de même que dans la troisième étape, mais pour la fin de course opposée.

Dans une sixième étape (36), l'unité logique de traitement compare la cohérence de la succession des apprentissages de fin de course (PFCF puis PFCO, ou inversement PFCO puis PFCF) et du mouvement majoritaire dans le premier sens (si CPT1 > CPT2) ou inversement le deuxième sens (si CPT2>CPT1).

S'il y a cohérence avec l'attribution de sens de la première étape (c'est-à-dire TFCF précédant TFCO pour un mouvement majoritaire dans le premier sens (S1), ou TFCO précédant TFCF pour un mouvement majoritaire dans le deuxième sens) alors, la procédure d'installation peut se terminer sans qu'il y ait modification du sens de rotation moteur, sinon,
dans une septième étape (37), l'unité logique de traitement procède à une inversion permanente du sens de mouvement, c'est-à-dire que la réception d'une trame d'ouverture (TO) provoque dorénavant l'alimentation du moteur selon le deuxième sens (S2), et la réception d'une trame de fermeture (TF) provoque dorénavant l'alimentation du moteur selon le premier sens (S1).

Ce mode de réalisation se fait à l'aide de deux compteurs. Il peut être de même utilisé un seul compteur, à fonction de comptage décomptage selon le sens de manoeuvre du moteur.

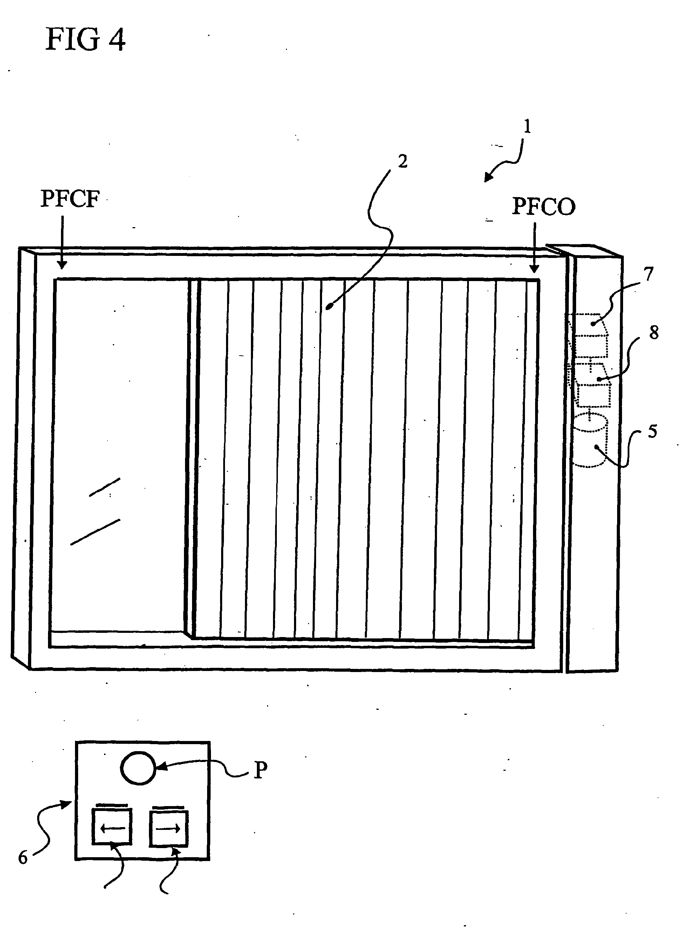

La figure 4 illustre une variante d'installation équipée des moyens de mise en concordance du sens de rotation du moteur, à la commande émise. Cette installation, comme précédemment, porte la référence générale (1) qui est, par exemple, une fermeture d'un garage dont l'élément de fermeture (2) se déplaçant horizontalement est destiné à être déplacé au moins entre deux positions, à savoir, une position de fin de course d'ouverture (PFCO), et une position de fin de course de fermeture (PFCF). Dans cette installation, il est donc aussi prévu un boîtier de commande ou émetteur (6) et un récepteur (7), auquel est associée une unité logique de traitement. Comme précédemment, l'émetteur (6) envoie une trame d'ouverture (TO) quand on appuie sur la touche d'ouverture (O) en mode normal, et respectivement une trame de fermeture (TF) quand on appuie sur la touche de fermeture (F). On notera que tout ce qui a été décrit précédemment au regard plus particulièrement de l'installation de la figure 1 dont le déplacement de l'élément d'occultation se déplace verticalement, s'applique aussi pour l'installation de la figure 4, dont le déplacement de l'élément mobile (2) se déplace horizontalement.

On a compris que le procédé de l'invention s'appliquait à tout type d'installation, que ce soit une installation avec un store, un volet roulant, ou une fermeture dont l'élément mobile se déplace soit verticalement, soit horizontalement, soit selon toute autre trajectoire comme, par exemple, une rotation autour d'un axe, tel qu'on le trouve dans les volets battants ou les portails.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Procédé de mise en concordance du sens de rotation d'un moteur (5) à la commande émise par un boîtier de commande (6), et reçue par un récepteur (7) dans une installation d'occultation ou de fermeture (1) du type comprenant un élément d'occultation ou de fermeture (2) mobile entre deux positions extrêmes de fin de course, une première position dite position de fin de course d'ouverture (PFCO), et une deuxième position dite de fin de course de fermeture (PFCF), **caractérisé en ce que** la mise en concordance est effectuée lors de l'enregistrement d'au moins une position de fin de course.

2. Procédé de mise en concordance du sens de rotation d'un moteur (5) à la commande émise par un boîtier de commande (6) dans une installation d'occultation ou de fermeture (1), selon la revendication 1, **caractérisé en ce que** la mise en concordance est effectuée lors du premier enregistrement d'une position de fin de course.

3. Procédé de mise en concordance du sens de rotation d'un moteur (5) à la commande émise par un boîtier de commande (6) dans une installation d'occultation ou de fermeture (1), selon la revendication 2, **caractérisé en ce que**
a-dans une première étape (21), l'unité logique du récepteur est configurée de sorte que le moteur (5) soit alimenté selon un premier sens de rotation (S1) à réception d'une trame dite d'ouverture (TO) correspondant normalement au déplacement d'ouverture de l'élément d'occultation ou de fermeture, et selon un deuxième sens de rotation (S2) à réception d'une trame dite de fermeture (TF), correspondant normalement à la fermeture de l'élément d'occultation ou de fermeture,
b-dans une deuxième étape (22), l'installateur manoeuvre le produit, à l'aide des touches appropriées de l'émetteur (6), jusqu'à atteindre la position fin de course de son choix,
c-dans une troisième étape (23), l'installateur agit sur l'émetteur (6) de manière à émettre la trame de fin de course d'ouverture (TFCO) s'il est en position fin de course d'ouverture (PFCO) ou à émettre la trame de fin de course de fermeture (TFÇF) s'il est en position fin de course de fermeture (PFCF),
d-dans une quatrième étape (24), l'unité logique de traitement associée au récepteur compare l'ordre d'enregistrement de fin de course (TFCO ou TFCF) au dernier ordre de mouvement reçu, (TO ou TF), et s'il y a cohérence avec l'attribution de sens de la première étape, la procédure d'installation peut se poursuivre sans qu'il y ait modification du sens de rotation moteur, sinon,
e-dans une cinquième étape (25), l'unité logique de traitement procède à une inversion permanente du sens de mouvement, c'est-à-dire que la réception d'une trame d'ouverture (TO) provoque dorénavant l'alimentation du moteur selon le deuxième sens (52), et la réception d'une trame de fermeture (TF) provoque dorénavant l'alimentation du moteur selon le premier sens (S1).

4. Procédé de mise en concordance du sens de rotation d'un moteur (5) à la commande émise par un boîtier de commande (6) dans une installation d'occultation ou de fermeture (1), selon la revendication 3, **caractérisé en ce que** la quatrième étape est précédée par une étape de test sur la durée de la dernière manoeuvre ou sur la distance parcourue lors de la dernière manoeuvre.

5. Procédé de mise en concordance du sens de rotation d'un moteur (5) à la commande émise par un boîtier de commande (6) dans une installation d'occultation ou de fermeture (1), selon la revendication 3, **caractérisé en ce que**
a-dans une première étape (21), l'unité logique du récepteur est configurée de sorte que le moteur (5) soit alimenté selon un premier sens de rotation (S1) à réception d'une trame dite d'ouverture (TO) correspondant normalement au déplacement d'ouverture de l'élément d'occultation ou de fermeture, et selon un deuxième sens de rotation (S2) à réception d'une trame dite de fermeture (TF), correspondant normalement à la fermeture de l'élément d'occultation ou de fermeture,
b-dans une deuxième étape (22), l'installateur manoeuvre le produit, à l'aide des touches appropriées de l'émetteur (6), jusqu'à atteindre la position fin de course de son choix,
c-dans une troisième étape (23), l'installateur agit sur l'émetteur (6) de manière à émettre la trame de fin de course d'ouverture (TFCO) s'il est en position fin de course d'ouverture (PFCO) ou à émettre la trame de fin de course de fermeture (TFCF) s'il est en position fin de course de fermeture (PFCF),
d-dans une quatrième étape, l'unité logique de traitement compare la cohérence de l'ordre d'enregistrement de fin de course (TFCO ou TFCF) et du mouvement majoritaire dans le premier sens (S1) ou inversement dans le deuxième sens (52), et s'il y a cohérence avec l'attribution de sens de la première étape (S1), la procédure d'installation peut se terminer sans qu'il y ait modification du sens de rotation moteur, sinon,
e-dans une cinquième étape (25), l'unité logique de traitement procède à une inversion permanente du sens de mouvement, c'est-à-dire que la réception d'une trame d'ouverture (TO) provoque dorénavant l'alimentation du moteur selon le deuxième sens (S2), et la réception d'une trame de fermeture (TF) provoque dorénavant l'alimentation du moteur selon le premier sens (S1).

6. Procédé de mise en concordance du sens de rotation d'un moteur (5) à la commande émise par un boîtier de commande (6) dans une installation d'occultation où de fermeture (1), selon la revendication 1, **caractérisé en ce que** la mise en concordance est effectuée lors du deuxième enregistrement d'une position de fin de course.

7. Procédé de mise en concordance du sens de rotation d'un moteur (5) à la commande émise par un boîtier de commande (6) dans une installation d'occultation ou de fermeture (1), selon la revendication 5, **caractérisé en ce que**
a-dans une première étape (31), l'unité logique du récepteur est configurée de sorte que le moteur soit alimenté selon un premier sens (S1) à réception d'une trame d'ouverture (TO), et selon un deuxième sens (S2) à réception d'une trame de fermeture (TF),
b-dans une deuxième étape (32), l'installateur manoeuvre le produit, à l'aide des touches appropriées de l'émetteur, jusqu'à atteindre la position fin de course de son choix,
c-dans une troisième étape (33), l'installateur agit sur l'émetteur (6)de manière à émettre la trame de fin de course d'ouverture (TFCO) s'il est en position fin de course d'ouverture ou à émettre la trame de fin de course de fermeture (TFCF) s'il est en position fin de course de fermeture, et l'unité logique de traitement compte d'une part l'étendue de mouvement dans le premier sens (S1), et d'autre part l'étendue de mouvement dans le deuxième sens (S2),
d-dans une quatrième étape (34), l'installateur manoeuvre le produit, à l'aide des touches appropriées de l'émetteur, de manière à atteindre la deuxième position de fin de course,
e-dans une cinquième étape (35), l'installateur agit de même que dans la troisième étape, mais pour la fin de course opposée,
f-dans une sixième étape (36), l'unité logique de traitement compare la cohérence de la succession des apprentissages de fin de course (FCF puis FCO, ou inversement FCO puis FCF) et du mouvement majoritaire dans le premier sens (S1) ou inversement dans le deuxième sens (S2), et s'il y a cohérence avec l'attribution de sens de la première étape (S1), la procédure d'installation peut se terminer sans qu'il y ait modification du sens de rotation moteur, sinon,
g-dans une septième étape (37), l'unité logique de traitement procède à une inversion permanente du sens de mouvement, c'est-à-dire que la réception d'une trame d'ouverture (TO) provoque dorénavant l'alimentation du moteur selon le deuxième sens (S2), et la réception d'une trame de fermeture (TF) provoque dorénavant l'alimentation du moteur selon le premier sens (S1).

8. Installation d'occultation (1) du type comprenant un élément d'occultation ou de fermeture (2) mobile entre deux positions extrêmes, une position de fin de course d'ouverture (PFO) et une position de fin de course de fermeture (PFPF) destiné à être mis en oeuvre par le procédé de mise en concordance de l'une quelconque des revendications précédentes, **caractérisée en ce qu'**elle comprend un élément d'occultation ou de fermeture (2) tel qu'un store ou un volet roulant, un volet battant, une porte coulissante ou un portail destiné à être déplacé au moins entré deux positions, à savoir, une position de fin de course d'ouverture (PFCO) et une position de fin de course de fermeture (PFCF), et est constituée par un élément d'actionnement (4) actionné par un moteur électrique (5), tandis qu'il est prévu un boîtier de commande (6) et un récepteur (7), auquel est associée une unité logique de traitement.

9. Installation d'occultation (1) du type comprenant un élément d'occultation ou de fermeture (2) mobile entre deux positions extrêmes selon la revendication 8, **caractérisée en ce qu'**elle comprend des moyens de mise en concordance du sens (S1, S2) de rotation du moteur (5) à la commande émise par l'émetteur (6).

10. Installation d'occultation (1) du type comprenant un élément d'occultation (2) mobile entre deux positions extrêmes selon la revendication 9, **caractérisée en ce qu'**elle comprend des moyens d'enregistrement d'au moins une position de fin de course.

11. Installation d'occultation (1) du type comprenant un élément d'occultation (2) mobile entre deux positions extrêmes selon l'une quelconque des revendications 8 à 10, **caractérisée en ce que** l'émetteur comprend au moins une touche de programmation (P) ou une combinaison de touches, permettant de passer du mode de fonctionnement normal au mode de fonctionnement dit de programmation permettant la mis en concordance.

12. Installation d'occultation (1) selon la revendication 11, **caractérisée en ce que** l'unité logique (8) permet l'inversion automatique de l'alimentation du moteur.

## Claims

1. Method for matching the direction of rotation of a motor (5) with the control issued by a control box (6) and received by a receiver (7) in a privacy or closing installation (1) of the type comprising a privacy or closing element (2) movable between two end positions, namely a first position called opening end position (PFCO) and a second position called closing end position (PFCF), **characterised in that** the matching is carried out during the recording of at least one of said end positions.

2. Method for matching the direction of rotation of a motor (5) with the control issued by a control box (6) in a privacy or closing installation (1) according to claim 1, **characterised in that** the matching is carried out during the first recording of an end position.

3. Method for matching the direction of rotation of a motor (5) with the control issued by a control box (6) in a privacy or closing installation (1) according to claim 2, **characterised in that**
a - in a first step (21), the logic unit of the receiver is configured in such a manner that the motor (5) is energised according to a first direction of rotation (S1) on receipt of a frame called opening frame (TO) that typically corresponds to the opening displacement of the privacy or closing element, and is energised according to a second direction of rotation (S2) on receipt of a frame called closing frame (TF) typically corresponding to the closing of the privacy or closing element,
b - in a second step (22), the installing person operates the product with the help of the appropriate keys of the transmitter (6) until reaching the desired end position,
c - in a third step (23), the installing person acts on the transmitter (6) in such a manner that the frame of the opening end position (TFCO) is transmitted if it is in the opening end position (PFCO), or that the frame of the closing end position (TFCF) is transmitted if it is in the closing end position (PFCF),
d - in a fourth step (24), the logic processing unit associated to the receiver compares the recording command of the end positions (TFCO or TFCF) to the last received movement command (TO or TF), and if there is consistency with the configuration of the direction of rotation in the first step, the installation procedure may be continued without need of modifying the direction of rotation of the motor, and if there is no consistency,
e - in a fifth step (25), the logic processing unit operates a permanent inversion of the direction of movement, namely that the receipt of an opening frame (TO) will now provoke the energising of the motor according to the second direction of rotation (S2), and the receipt of a closing frame (TF) will now provoke the energising of the motor according to the first direction of rotation (S1).

4. Method for matching the direction of rotation of a motor (5) with the control issued by a control box (6) in a privacy or closing installation (1) according to claim 3, **characterised in that** the fourth step is preceded by a test step with regard to the duration of the last operation or to the distance covered during the last operation.

5. Method for matching the direction of rotation of a motor (5) with the control issued by a control box (6) in a privacy or closing installation (1) according to claim 3, **characterised in that**
a - in a first step (21), the logic unit of the receiver is configured in such a manner that the motor (5) is energised according to a first direction of rotation (S1) on receipt of a frame called opening frame (TO) that typically corresponds to the opening displacement of the privacy or closing element, and is energised according to a second direction of rotation (S2) on receipt of a frame called closing frame (TF) typically corresponding to the closing of the privacy or closing element,
b - in a second step (22), the installing person operates the product with the help of the appropriate keys of the transmitter (6) until reaching the desired end position,
c - in a third step (23), the installing person acts on the transmitter (6) in such a manner that the frame of the opening end position (TFCO) is transmitted if it is in the opening end position (PFCO), or that the frame of the closing end position (TFCF) is transmitted if it is in the closing end position (PFCF),
d - in a fourth step, the logic processing unit compares the consistency of the recording command of the end positions (TFCO or TFCF) with the major movement according to the first direction of rotation (S1) or, inversely, according to the second direction of rotation (S2), and if there is consistency with the configuration of the direction of rotation in the first step (S1), the installation procedure may be continued without need of modifying the direction of rotation of the motor, and if there is no cosistency,
e - in a fifth step (25), the logic processing unit operates a permanent inversion of the direction of movement, namely that the receipt of an opening frame (TO) will now provoke the energising of the motor according to the second direction of rotation (S2), and the receipt of a closing frame (TF) will now provoke the energising of the motor according to the first direction of rotation (S1).

6. Method for matching the direction of rotation of a motor (5) with the control issued by a control box (6) in a privacy or closing installation (1) according to claim 1, **characterised in that** the matching is carried out during the second recording of an end position.

7. Method for matching the direction of rotation of a motor (5) with the control issued by a control box (6) in a privacy or closing installation (1) according to claim 5, **characterised in that**
a - in a first step (31), the logic unit of the receiver is configured in such a manner that the motor is energised according to a first direction of rotation (S1) on receipt of a frame called opening frame (TO), and according to a second direction of rotation (S2) on receipt of a frame called closing frame (TF),
b - in a second step (32), the installing person operates the product with the help of the appropriate keys of the transmitter until reaching the desired end position,
c - in a third step (33), the installing person acts on the transmitter (6) in such a manner that the frame of the opening end position (TFCO) is transmitted if it is in the opening end position, or that the frame of the closing end position (TFCF) is transmitted if it is in the closing end position, and the logic processing unit counts the degree of a movement in the first direction (S1), on one hand, and the degree of a movement in the second direction (S2), on the other hand,
d - in a fourth step (34), the installing person operates the product with the help of the appropriate keys on the transmitter until reaching the second end position,
e - in a fifth step (35), the installing person acts as in the third step but for reaching the opposed end position,
f - in a sixth step (36), the logic processing unit compares the consistency of the succession of the end position learning procedures (FCF and then FCO or, inversely, FCO and then FCF) with the major movement according to the first direction of rotation (S1) or, inversely, according to the second direction of rotation (S2), and if there is consistency with the configuration of the direction of rotation in the first step (S1), the installation procedure may be finished without need of modifying the direction of rotation of the motor, and if there is no cosistency,
g - in a seventh step (37), the logic processing unit operates a permanent inversion of the direction of movement, namely that the receipt of an opening frame (TO) will now provoke the energising of the motor according to the second direction of rotation (S2), and the receipt of a closing frame (TF) will now provoke the energising of the motor according to the first direction of rotation (S1).

8. Privacy installation (1) of the type comprising a privacy or closing element (2) movable between two end positions, namely a first position called opening end position (PFCO) and a second position called closing end position (PFCF), intended to be implemented by the matching method according to any one of the preceding claims, **characterised in that** the installation comprises a privacy or a closing element (2) such as an awning, a roller shutter, a folding shutter, a sliding door or a gate, intended to be displaced at least between two positions, namely an opening end position (PFCO) and a closing end position (PFCF), and is composed of an actuating element (4) driven by an electric motor (5), and furthermore a control box (6) and a receiver (7) are provided to which a logic processing unit is associated.

9. Privacy installation (1) of the type comprising a privacy or closing element (2) movable between two end positions according to claim 8, **characterised in that** it contains means for matching the direction of rotation (S1, S2) of the motor (5) with the control transmitted by the transmitter (6).

10. Privacy installation (1) of the type comprising a privacy or closing element (2) movable between two end positions according to claim 9, **characterised in that** it contains means for recording at least one end position.

11. Privacy installation (1) of the type comprising a privacy or closing element (2) movable between two end positions according to any one of claims 8 to 10, **characterised in that** the transmitter contains at least a programming key (P) or a combination of keys allowing to switch from the normal operating mode to an operating mode called programming mode allowing the matching procedure.

12. Privacy installation (1) according to claim 11, **characterised in that** the logic unit (8) allows the automatic inversion of the motor energy supply.

## Patentansprüche

1. Verfahren, durch das die Drehrichtung eines Motors (5) mit einem Befehl in Übereinstimmung gebracht wird, welcher von einem Steuerkasten (6) abgegeben und von einem Empfänger (7) in einer Verdunkelungs- oder Schliess-Installation (1) empfangen wird, die ein Verdunkelungs- oder Schliesselement (2) aufweist, das zwischen zwei Endstellungspositionen beweglich ist, nämlich einer ersten Position, die Öffnungsendstellung (PFCO) genannt wird, und einer zweiten Position, die Schliessendstellung (PFCF) genannt wird, **dadurch gekennzeichnet, dass** die Übereinstimmung während der Registrierung wenigstens einer Endstellungsposition hergestellt wird.

2. Verfahren, durch das die Drehrichtung eines Motors (5) mit einem Befehl in Übereinstimmung gebracht wird, welcher von einem Steuerkasten (6) in einer Verdunkelungs- oder Schliessinstallation (1) abgegeben wird, nach Anspruch 1, **dadurch gekennzeichnet, dass** die Übereinstimmung während der Registrierung der ersten Endstellungsposition hergestellt wird.

3. Verfahren nach Anspruch 2, **dadurch gekennzeichnet, dass**
a) in einem ersten Schritt (21) die logische Einheit des Empfängers so konfiguriert wird, dass der Motor (5) beim Empfang eines Öffnungsdatenblock (TO) genannten Datenblocks, der normalerweise der Öffnungsbewegung des Verdunkelungs- oder Schliesselements entspricht, in einer ersten Drehrichtung (S1) und beim Empfang eines Schliessdatenblock (TF) genannten Datenblocks, der normalerweise der Schliessung des Verdunkelungs- oder Schliesselements entspricht, in einer zweiten Drehrichtung (S2) gespeist wird,
b) in einem zweiten Schritt (22) der Installateur am Produkt mit Hilfe geeigneter Tasten des Senders (6) Einstellungen vornimmt, bis die Endstellungsposition seiner Wahl erreicht ist,
c) in einem dritten Schritt (23) der Installateur den Sender (6) so steuert, dass der die Öffnungsendstellung darstellende Datenblock (TFCO) ausgesandt wird, wenn er sich in der der Öffnungsendstellung entsprechenden Position (PFCO) befindet, oder der die Schliessendstellung darstellende Datenblock (TFCF) ausgesandt wird, wenn er sich in der der Schliessendstellung (PFCF) entsprechenden Position befindet,
d) in einem vierten Schritt (24) die mit dem Empfänger verbundene logische Verarbeitungseinheit den Befehl der Registrierung der Endstellung (TFCO oder TFCF) mit dem letzten empfangenen Bewegungsbefehl (TO oder TF) vergleicht und, wenn Übereinstimmung mit der Zuordnung der Richtung des ersten Schritts besteht, sich das Installationsverfahren fortsetzen kann, ohne dass eine Änderung der Drehrichtung des Motors erfolgt, wenn nicht
e) in einem fünften Schritt (25) die logische Verarbeitungseinheit eine ständige Umkehr der Bewegungsrichtung bewirkt, das heisst, dass der Empfang eines Öffnungsdatenblocks (TO) künftig die Speisung des Motors in der zweiten Richtung (S2) und der Empfang eines Schliessdatenblocks (TF) künftig die Speisung des Motors in der ersten Richtung (S1) bewirkt.

4. Verfahren nach Anspruch 3, **dadurch gekennzeichnet, dass** dem vierten Schritt ein Testschritt bezüglich der Dauer der letzten Betätigung oder der während der letzten Betätigung durchlaufenen Strecke vorausgeht.

5. Verfahren nach Anspruch 3, **dadurch gekennzeichnet, dass**
a) in einem ersten Schritt (21) die logische Einheit des Empfängers so konfiguriert wird, dass der Motor bei Empfang eines Öffnungsdatenblock (TO) genannten Datenblocks, der normalerweise der Öffnungsbewegung des Verdunkelungs- oder Schliesselements entspricht, in einer ersten Drehrichtung (S1) und bei Empfang eines Schliessdatenblock (TF) genannten Datenblocks, der normalerweise der Schliessung des Verdunkelungs- oder Schliesselements entspricht, in einer zweiten Drehrichtung (S2) gespeist wird,
b) in einem zweiten Schritt (22) der Installateur am Produkt mit Hilfe geeigneter Tasten des Senders (6) Einstellungen vornimmt, bis die Endstellungsposition seiner Wahl erreicht ist,
c) in einem dritten Schritt (23) der Installateur den Sender (6) so steuert, dass der die Öffnungsendstellung darstellende Datenblock (TFCO) ausgesandt wird, wenn er sich in der Öffnungsendstellung (PFCO) befindet, oder der die Schliessendstellung darstellende Datenblock (TFCF) ausgesandt wird, wenn er sich in der Schliessendstellung (PFCF) befindet,
d) in einem vierten Schritt die logische Verarbeitungseinheit die Übereinstimmung des Befehls zum Registrieren der Endstellung (TFCO oder TFCF) und der vorherrschenden Bewegung in der ersten Richtung (S1) oder umgekehrt in der zweiten Richtung (S2) vergleicht, und, wenn Übereinstimmung mit der Zuordnung der Richtung des ersten Schritts (S1) besteht, das Installationsverfahren beendet werden kann, ohne dass eine Änderung der Drehrichtung stattfindet, wenn nicht,
e) in einem fünften Schritt (25) die logische Verarbeitungseinheit eine ständige Umkehr der Bewegungsrichtung durchführt, das heisst, dass beim Empfang eines Öffnungsdatenblocke (TO) die Speisung des Motors künftig in der zweiten Richtung (S2) und beim Empfang eines Schliessdatenblocks (TF) die Speisung des Motors künftig in der ersten Richtung (S1) erfolgt.

6. Verfahren, durch das eine Übereinstimmung der Drehrichtung eines Motors (5) mit einem von einem Steuerkasten (6) abgegebenen Befehl in einer Verdunkelungs- oder Schliess-Installation (1) hergestellt wird, nach Anspruch 1, **dadurch gekennzeichnet, dass** die Übereinstimmung bei der zweiten Registrierung einer Endstellungsposition stattfindet.

7. Verfahren nach Anspruch 5, **dadurch gekennzeichnet, dass**
a) in einem ersten Schritt (31) die logische Einheit des Empfängers so konfiguriert wird, dass der Motor beim Empfang eines Öffnungsdatenblocks (TO) in einer ersten Richtung (S1) und beim Empfang eines Schliessdatenblocks (TF) in einer zweiten Richtung (S2) gespeist wird,
b) in einem zweiten Schritt (32) der Installateur mit Hilfe geeigneter Tasten des Senders an dem Produkt Einstellungen vornimmt, bis die Endstellungsposition seiner Wahl erreicht ist,
c) in einem dritten Schritt (33) der Installateur den Sender (6) so steuert, dass der die Öffnungsendstellung darstellende Datenblock (TFCO) ausgesandt wird, wenn er sich in der Position der Öffnungsendstellung befindet, oder der die Schliessendstellung darstellende Datenblock (TFCF) ausgesandt wird, wenn er sich in der Position der Schliessendstellung befindet, und die logische Verarbeitungseinheit einerseits die während der Bewegung in der ersten Richtung (S1) und andererseits die während der Bewegung in der zweiten Richtung (S2) zurückgelegte Strecke zählt,
d) in einem vierten Schritt (34) der Installateur mit Hilfe geeigneter Tasten des Senders am Produkt Einstellungen vornimmt, bis die zweite Endstellungsposition erreicht ist,
e) in einem fünften Schritt (35) der Installateur genauso handelt wie im dritten Schritt, jedoch für die entgegengesetzte Endstellung,
f) in einem sechsten Schritt (36) die logische Verarbeitungseinheit die Übereinstimmung der Aufeinanderfolge der die Endstellung betreffenden Lernvorgänge (FCF, dann FCO, oder umgekehrt FCO, dann FCF) und die vorherrschende Bewegung in der ersten Richtung (S1) oder umgekehrt in der zweiten Richtung (S2) vergleicht, und wenn Übereinstimmung mit der Zuordnung der Richtung des ersten Schritts (S1) besteht, das Installationsverfahren beendet werden kann, ohne dass eine Änderung der Drehrichtung des Motors stattfindet, wenn nicht
g) in einem siebten Schritt (37) die logische Verarbeitungseinheit eine ständige Umkehr der Bewegungsrichtung durchführt, das heisst, dass der Empfang eines Öffnungsdatenblocks (TO) künftig die Speisung des Motors in der zweiten Drehrichtung (S2) und der Empfang eines Schliessdatenblocks (TF) künftig die Speisung des Motors in der ersten Drehrichtung (S1) bewirkt.

8. Verdunkelungsinstallation (1) mit einem Verdunkelungs- oder Schliesselement (2), das zwischen zwei Grenzpositionen beweglich ist, nämlich einer Position der Öffnungsendstellung (PFCO) und einer Position der Schliessendstellung (PFCF), und welche dazu bestimmt ist, durch das Verfahren nach einem der vorangehenden Ansprüche eingerichtet zu werden, **dadurch gekennzeichnet, dass** es ein Verdunkelungs- oder Schliesselement (2) aufweist, wie eine Markise oder einen Rolladen, eine Flügeltür, eine Schiebetür oder ein Tor, welches dazu bestimmt ist, zwischen zwei Positionen, nämlich einer Öffnungsendstellung PFCO) und einer Schliessendstellung (PFCF), verschoben zu werden, und das aus einem von einem Elektromotor (5) angetriebenen Betätigungselement (4) besteht, und dass ein Steuerkasten (6) und ein Empfänger (7) vorgesehen sind, der mit einer logischen Verarbeitungseinheit verbunden ist.

9. Verdunkelungsinstallation (1) nach Anspruch 8, **dadurch gekennzeichnet, dass** sie Mittel aufweist, um die Drehrichtung (S1, S2) des Motors (5) mit dem vom Sender (6) abgegebenen Befehl in Übereinstimmung zu bringen.

10. Verdunkelungsinstallation (1) nach Anspruch 9, **dadurch gekennzeichnet, dass** sie Mittel zum Registrieren wenigstens einer Endstellungsposition aufweist.

11. Verdunkelungsinstallation (1) nach einem der Ansprüche 8 bis 10, **dadurch gekennzeichnet, dass** der Sender wenigstens eine Programmierungstaste (P) oder eine Kombination von Tasten aufweist, die es erlaubt, vom normalen Funktionsmodus zum sogenannten Programmierungsmodus überzugehen, welcher erlaubt, die Übereinstimmung herzustellen.

12. Verdunkelungsinstallation (1) nach Anspruch 11, **dadurch gekennzeichnet, dass** die logische Einheit (8) erlaubt, die Motorspeisung automatisch umzukehren.
